(19) 

Europäisches
Patentamt
European
Patent Office
Office européen
des brevets

(11) **EP 4 297 479 A1**

(12) **EUROPEAN PATENT APPLICATION**
published in accordance with Art. 153(4) EPC

(43) Date of publication:
**27.12.2023 Bulletin 2023/52**

(21) Application number: **22781478.7**

(22) Date of filing: **23.03.2022**

(51) International Patent Classification (IPC):
*H04W 28/20* (2009.01)          *H04W 28/22* (2009.01)
*H04W 28/24* (2009.01)          *H04W 72/04* (2023.01)
*H04W 76/16* (2018.01)          *H04W 88/08* (2009.01)

(52) Cooperative Patent Classification (CPC):
**H04W 28/20; H04W 28/22; H04W 28/24;
H04W 72/04; H04W 76/16; H04W 88/08**

(86) International application number:
**PCT/KR2022/004078**

(87) International publication number:
**WO 2022/211358 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021  KR 20210040528**

(71) Applicant: **Samsung Electronics Co., Ltd.
Suwon-si, Gyeonggi-do 16677 (KR)**

(72) Inventors:
• **MA, Yongjae
Suwon-si Gyeonggi-do 16677 (KR)**
• **OAK, Jeongyeob
Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **DEVICE AND METHOD FOR OPERATING DUAL CONNECTIVITY STRUCTURE IN WIRELESS COMMUNICATION SYSTEM**

(57)    The present disclosure relates to a 5th generation (5G) or pre-5G communication system for supporting a higher data transfer rate than a 4th generation (4G) communication system such as Long Term Evolution (LTE). A method of operating a base station according to the disclosure includes receiving a request message including at least one band combination from a Master Node (MN), measuring a data rate for the at least one band combination and generating second data rate information, selecting a band combination from among the at least one band combination, based on the second data rate information and first data rate information, and transmitting a response message including a band combination selected from among the at least one band combination to another base station. The request message may include the first data rate information. The first data rate information may include information on the data rate when the base station uses the at least one band combination.

FIG.7

**Description**

[Technical Field]

The disclosure relates,in general, to a wireless communication system, and, in particular, to an apparatus and method for resource allocation in the wireless communication system.

[Background Art]

To meet a demand on wireless data traffic which has been in an increasing trend after a 4th generation (4G) communication system was commercialized, there is an ongoing effort to develop an improved 5th generation (5G) communication system or a pre-5G communication system. For this reason, the 5G communication system or the pre-5G communication system is called a beyond 4G network communication system or a post long term evolution (LTE) system.

To achieve a high data transfer rate, the 5G communication system is considered to be implemented in an mmWave band (e.g., such as a 60GHz band). To reduce a propagation path loss at the mmWave band and to increase a propagation delivery distance, beamforming, massive multiple input multiple output (MIMO), full dimensional MIMO (FD-MIMO), array antenna, analog beam-forming, and large scale antenna techniques are under discussion in the 5G communication system.

In addition, to improve a network of a system, techniques, such as an evolved small cell, an advanced small cell, a cloud radio access network (RAN), an ultra-dense network, device to device (D2D) communication, a wireless backhaul, a moving network, cooperative communication, coordinated multi-points (CoMP), and reception interference cancellation, or the like are being developed in the 5G communication system.

In addition thereto, hybrid frequency shift keying and quadrature amplitude modulation (FQAM) and sliding window superposition coding (SWSC) as an advanced coding modulation (ACM) technique and filter bank multi carrier (FBMC), non orthogonal multiple access (NOMA), and sparse code multiple access (SCMA), or the like as an advanced access technology are being developed in the 5G system.

With the rapid increase in the use of electronic devices, such as smartphones, laptops, and tablets, which are always carried and used by people, there is an exponential growth of a demand for wireless data transmission. As one of various ways of meeting such a user's demand, a dual connectivity (DC) technology has been introduced in 3rd generation partnership project (3GPP) Release 12. The DC technology allows the electronic device to perform data transmission by accessing a master node (MN) and a secondary node (SN) simultaneously to use a plurality of carriers, thereby increasing a user's data transfer rate and providing mobility robustness.

[Disclosure of Invention]

[Technical Problem]

Based on the above discussion, the disclosure provides an apparatus and method for increasing a data transfer rate when operating dual connectivity (DC) in a wireless communication system.

In addition, the disclosure provides an apparatus and method for selecting a best band combination by considering a data rate and a latency when operating DC in a wireless communication system.

In addition, the disclosure provides an apparatus and method for operating a base station in an optimal manner in a multi-radio dual connectivity (MR-DC) in a wireless communication system.

[Solution to Problem]

A secondary node (SN) apparatus according to an embodiment of the disclosure described above may include a transceiver and a processor operatively coupled to the transceiver. The processor may be configured to receive a request message from a master node (MN), wherein the request message includes information indicating at least one band combination and first data rate information on a data rate of a master cell group (MCG) for each of the at least one band combination, identify a band combination from among the at least one band combination, based on the first data rate information and second data rate information on a data rate of a secondary cell group (SCG), and transmit a response message including information indicating the identified band combination to the MN.

An MN apparatus according to an embodiment of the disclosure described above may include a transceiver, and a processor operatively coupled to the transceiver. The processor may be configured to transmit a request message to an SN, wherein the request message includes information indicating at least one band combination and first data rate information on a data rate of an MCG for each of the at least one band combination, and receive a response message including information indicating the identified band combination from the SN. The band combination may be identified from among the at least one band combination, based on the first data rate information and second data rate information on a data rate of an SCG.

A method of operating an SN according to an embodiment of the disclosure described above may include receiving a request message from an MN, wherein the request message includes information indicating at least one band combination and first data rate information on a data rate of an MCG for each of the at least one band combination, identifying a band combination from among the at least one band combination, based on the first data rate information and second data rate information on a data rate of an SCG, and transmitting a response message including information indicating the identified band combination to the MN.

A method of operating an MN apparatus according to an embodiment of the disclosure described above may include transmitting a request message to an SN, wherein the request message includes information indicating at least one band combination and first data rate information on a data rate of an MCG for each of the at least one band combination, and receiving a response message including information indicating the identified band combination from the SN. The band combination may be identified from among the at least one band combination, based on the first data rate information and second data rate information on a data rate of an SCG.

[Advantageous Effects of Invention]

An apparatus and method according to various embodiments of the disclosure allow a Master Node (MN) and a Secondary Node (SN) to operate efficiently by selecting a best band combination in a Multi-Radio Dual Connectivity (MR-DC).

In addition thereto, advantages acquired in the disclosure are not limited to the aforementioned advantages, and other advantages not mentioned herein may be clearly understood by those skilled in the art to which the disclosure pertains from the following descriptions.

[Brief Description of Drawings]

FIG. 1 illustrates a wireless communication system according to various embodiments of the disclosure;
FIG. 2 illustrates a functional structure of a base station in a wireless communication system according to embodiments of the disclosure;
FIG. 3 illustrates a functional structure of a terminal in a wireless communication system according to various embodiments of the disclosure;
FIG. 4A and 4B illustrate a signaling flow for determining a band combination according to embodiments of the disclosure;
FIG. 5 illustrates an example of selecting a band combination (BC) in a wireless communication system according to embodiments of the disclosure;
FIG. 6 illustrates an operational flow of a master node (MN) according to embodiments of the disclosure; and
FIG. 7 illustrates an operational flow of a secondary node (SN) according to embodiments of the disclosure.

[Best Mode for Carrying out the Invention]

Terms used in the disclosure are for the purpose of describing particular embodiments only and are not intended to limit other embodiments. A singular expression may include a plural expression unless there is a contextually distinctive difference. All terms (including technical and scientific terms) used herein have the same meaning as commonly understood by those ordinarily skilled in the art disclosed in the disclosure. It will be further understood that terms, such as those defined in commonly used dictionaries, should be interpreted as having a meaning that is consistent with their meaning in the context of the relevant art, and will not be interpreted in an idealized or overly formal sense unless expressly so defined herein. Optionally, the terms defined in the disclosure should not be interpreted to exclude the embodiments of the disclosure.

A hardware-based approach is described for example in the various embodiments of the disclosure described hereinafter. However, since the various embodiments of the disclosure include a technique in which hardware and software are both used, a software-based approach is not excluded in the embodiments of the disclosure.

Terms used hereinafter in relation to a message (e.g., a signal, a message, information, signaling, data), terms related to multiple connectivity (e.g., dual connectivity (DC), multi-radio access technology (RAT) (MR)-DC, a cell group, a master cell group (MCG), a secondary cell group (SCG)), terms referring to a signal (e.g., a reference signal, system information, a control signal, a message, data), and terms referring to network entities (e.g., a communication node, a radio node, a radio unit, a network node, a master node (MN), a secondary node (SN), a transmission/reception point (TRP), a digital unit (DU), a radio unit (RU), a massive MIMO unit (MMU)) or the like are exemplified for convenience of explanation. Therefore, the disclosure is not limited to the terms described below, and thus other terms having the same technical meaning may also be used.

In addition, although the disclosure describes various embodiments by using terms used in some communication standards (e.g., 3rd generation partnership project (3GPP)), this is for exemplary purposes only. Various embodiments of the disclosure may be easily modified and applied to other communication systems.

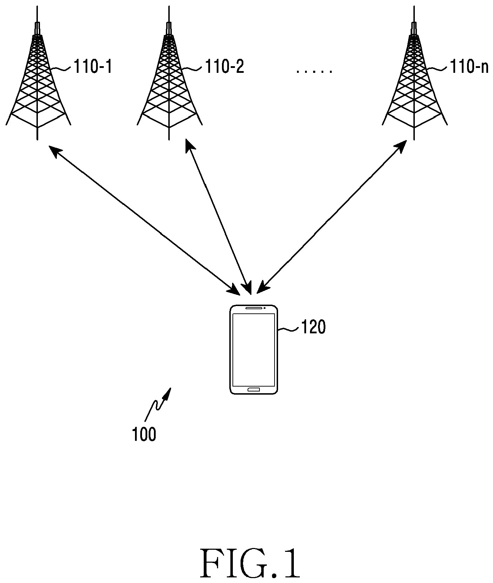

FIG. 1 illustrates a wireless communication system 100 according to various embodiments of the disclosure. In FIG. 1, base stations 110-1, 110-2, ..., 110-n and a terminal 120 are exemplified as some of nodes using a radio channel in the wireless communication system. The base stations 110-1, 110-2, ..., 110-n may be coupled to the terminal 120 through multiple connectivity (e.g., dual connectivity (DC)). Hereinafter, for convenience of descriptions, a common description for each of the base stations 110-1, 110-2, ..., 110-n may be described by being referred to as the base station 110.

The base stations 110-1, 110-2, ..., 110-n are network infrastructures which provide radio access to the terminal 120. The base station 110 has coverage defined as a specific geographical area, based on a distance capable of transmitting a signal. The term 'coverage' used hereinafter may refer to a service coverage area in the base station 110. The base station 110 may cover one cell, or may cover multiple cells. Herein, the multiple cells may be divided by a supported frequency and an area of a covered sector.

In addition to the term 'base station', the base station 110 may be referred to as an 'access point (AP)', an 'eNodeB (eNB)', a '5th generation (5G) node', a '5G NodeB (NB)', a 'next generation Node B (gNB)', a 'wireless point', a 'transmission/reception point (TRP)', a 'distributed unit (DU)', a 'radio unit (RU)', a remote radio head (RRH), or other terms having equivalent technical meanings. According to various embodiments, the base station 110 may be coupled to at least one TRP. The base station 110 may transmit a downlink signal or receive an uplink signal with respect to the terminal 120 through the at least one TRP.

As a device used by a user, the terminal 120 communicates with the base station 110 through the radio channel. Optionally, the terminal 120 may be operated without user involvement. That is, as a device for performing machine type communication (MTC), the terminal 120 may not be carried by the user. In addition to the term 'terminal', the terminal 120 may be referred to as a 'user equipment (UE)', a 'mobile station', a 'subscriber station', a 'customer premises equipment (CPE)', a 'remote terminal', a 'wireless terminal', an 'electronic device', a 'vehicle terminal', a 'user device', or other terms having equivalent technical meanings.

A dual connectivity (DC) technology is one type of multiple-connectivity technologies introduced from the 3rd generation partnership project (3GPP) standard release 12. In the DC technology, a terminal is simultaneously coupled to two independent heterogeneous or homogeneous wireless communication cell groups having a separate radio resource control entity, and a frequency resource on a component carrier of a cell in each cell group located in a different frequency band is used for signal transmission/reception to increase frequency use efficiency of the terminal and a base station. The DC consists of a master cell group in which a control plane is directly coupled to a core network to manage a radio resource control state of the terminal and a secondary cell group associated with the master cell group.

A carrier aggregation (CA) technology is a technology introduced in the 3GPP standard release 10. In the CA technology, the terminal is coupled to a homogenous wireless communication cell group having a common radio resource control entity, and a frequency resource on a component carrier of each cell located in a different frequency band is used for signal transmission/reception to increase frequency use efficiency of the terminal and the base station.

Due to technical advantages of increasing efficiency in using limited wireless communication resources of the terminal and base station, the DC technology and the CA technology are actively studied in academic terms. In particular, a 5G mobile communication system uses a non-stand alone type in which an operation is achieved in association with a 4G core network as a basic operation scheme, which is utilized as a core technology in a commercial service supporting the 5G mobile communication system.

In various embodiments of the disclosure, a situation in which the base stations 110-1, 110-2, ..., 110-n are coupled to the terminal 120 through multiple connectivity is described. As described above, the multiple connectivity refers to a communication technology in which the terminal 210 is coupled to each of the base stations 110-1, 110-2, ..., 110-n through an independent radio access technology (RAT). For example, the terminal 120 may be coupled to each of two base stations through dual connectivity (DC) which is one type of the multiple connectivity. For example, the terminal 120 may be coupled to an eNB base station through long term evolution (LTE), and may be coupled to a gNB base station through new radio (NR). Each base station may be referred to as a communication node. One or more cells provided in one base station may be referred to as a cell group. That is, the base station may support one or more cell groups. A base station which provides a master cell group (MCG) may provide a master node (MN), and a base station which provides a secondary cell group (SCG) may provide a secondary node (SN).

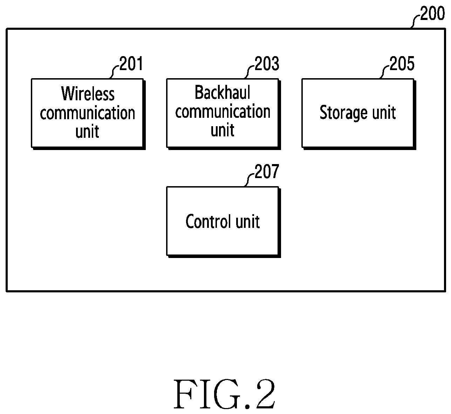

FIG. 2 illustrates a functional structure of a base station 200 in a wireless communication system according to embodiments of the disclosure. The base station 200 exemplified in FIG. 2 may be understood as one base station among the base stations 110-1, 110-2, ..., 110-n of FIG. 1. Hereinafter, the term '... unit', '... device', or the like implies a unit of processing at least one function or operation, and may be implemented in hardware or software or in combination of the hardware and the software.

Referring to FIG. 2, the base station 200 includes a wireless communication unit 201, a backhaul communication unit 203, a storage unit 205, and a control unit 207.

The wireless communication unit 201 performs functions for transmitting and receiving a signal through a radio channel. For example, the wireless communication unit 201 performs a function of conversion between a baseband signal and a bit-stream according to a physical layer standard of a system. For example, in data transmission, the wireless communication unit 201 generates complex symbols by coding and modulating a transmission bit-stream. In addition, in data reception, the wireless communication unit 201 restores a reception bit-stream by demodulating and decoding a baseband signal. In addition, the wireless communication unit 201 up-converts a baseband signal into a radio frequency (RF) signal and thereafter transmits it through an antenna, and down-converts an RF signal received through the antenna into a baseband signal.

For this, the wireless communication unit 201 may include a transmission filter, a reception filter, an amplifier, a mixer, an oscillator, a digital to analog converter (DAC), an analog to digital converter (ADC), or the like. In addition, the wireless communication unit 201 may include a plurality of transmission/reception paths. Further, the wireless communication unit 201 may include at least one antenna array constructed of a plurality of antenna elements. From a hardware aspect, the wireless communication unit 201 may be constructed of a digital unit and an analog unit, and the analog unit may be constructed of a plurality of sub-units according to operating power, operating frequency, or the like. According to various embodiments, the wireless communication unit 201 may include a unit of forming a beam, i.e., a beamforming unit. For example, the wireless communication unit 201 may include a Massive MIMO Unit (MMU).

The wireless communication unit 201 may transmit/receive a signal. To this end, the wireless communication unit 201 may include at least one transceiver. For example, the wireless communication unit 201 may transmit a synchronization signal, a reference signal, system information, a message, control information, or data. In addition, the wireless communication unit 201 may perform beamforming. In order to assign a directivity depending on the setting of the control unit 207 to a signal to be transmitted/received, the wireless communication unit 201 may apply a beamforming weight to the signal. According to an embodiment, the wireless communication unit 201 may generate a baseband signal depending on a scheduling result and a transmit power calculation result. In addition, an RF unit in the wireless communication unit 201 may transmit the generated signal through an antenna.

The wireless communication unit 201 transmits and receives a signal as described above. Accordingly, the wireless communication unit 201 may be referred to as a transmitter, a receiver, or a transceiver. In addition, in the following description, transmission and reception performed through a radio channel are used to imply that the aforementioned processing is performed by the wireless communication unit 201.

The backhaul communication unit 203 provides an interface for preforming communication with different nodes in a network. That is, the backhaul communication unit 203 converts a bit-stream transmitted from the base station 200 to a different node, e.g., a different access node, a different base station, an upper node, a core network, or the like, into a physical signal, and converts a physical signal received from the different node into a bit-stream.

The storage unit 205 stores data such as a basic program, application program, configuration information, or the like for an operation of the base station 200. The storage unit 205 may include a memory. The storage unit 205 may be constructed of a volatile memory, a non-volatile memory, or a combination of the volatile memory and the non-volatile memory. In addition, the storage unit 205 may provide the stored data according to a request of the control unit 207.

The control unit 207 controls overall operations of the base station 200. For example, the control unit 207 may transmit and receive a signal via the communication unit 201 or the backhaul communication unit 203. Further, the control unit 207 writes and reads data in the storage unit 205. In addition, the control unit 207 may perform functions of a protocol stack required in a communication specification. To this end, the control unit 207 may include at least one processor.

The structure of the base station 200 illustrated in FIG. 2 is only an example of a base station, and the example of the base station performing various embodiments of the disclosure is not limited to the structure illustrated in FIG. 2. That is, the structure may be added, deleted, or changed in part according to various embodiments.

Although the base station is described as one entity in FIG. 2, the disclosure is not limited thereto. The base station according to various embodiments of the disclosure may be implemented to constitute an access network having not only an integrated deployment but also a distributed deployment. According to an embodiment, the base station may be divided into a central unit (CU) and a digital unit (DU). The CU may be implemented to perform functions of upper layers (e.g., packet data convergence protocol (RRC)), and the DU may be implemented to perform functions of lower layers (e.g., medium access control (MAC), and physical (PHY)). The DU of the base station may constitute beam coverage on a radio channel.

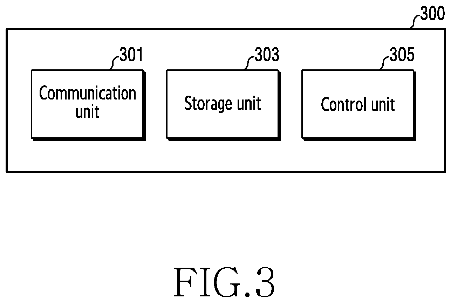

FIG. 3 illustrates a functional structure of a user equipment (UE) in a wireless communication system according to various embodiments of the disclosure. A UE 300 exemplified in FIG. 3 may correspond to the terminal 120 of FIG.

1. Hereinafter, the term'... unit', '... device', or the like implies a unit of processing at least one function or operation, and may be implemented in hardware or software or in combination of the hardware and the software.

Referring to FIG. 3, the UE 300 includes a communication unit 301, a storage unit 303, and a control unit 305.

The communication unit 301 performs functions for transmitting and receiving a signal through a radio channel. For example, the communication unit 301 performs a function of conversion between a baseband signal and a bit-stream according to a physical layer standard of a system. For example, in data transmission, the communication unit 301 generates complex symbols by coding and modulating a transmission bit-stream. In addition, in data reception, the communication unit 301 restores a reception bit-stream by demodulating and decoding a baseband signal. In addition, the communication unit 301 up-converts a baseband signal into an RF signal and thereafter transmits it through an antenna, and down-converts an RF signal received through the antenna into a baseband signal. For example, the communication unit 301 may include a transmission filter, a reception filter, an amplifier, a mixer, an oscillator, a DAC, an ADC, or the like.

In addition, the communication unit 301 may include a plurality of transmission/reception paths. Further, the communication unit 301 may include an antenna unit. The communication unit 301 may include at least one antenna array constructed of a plurality of antenna elements. From a hardware aspect, the communication unit 301 may be constructed of a digital circuit and an analog circuit (e.g., a radio frequency integrated circuit (RFIC)). Herein, the digital circuit and the analog circuit may be implemented as one package. In addition, the communication unit 301 may include a plurality of RF chains. In addition, the communication unit 301 may perform beamforming. In order to assign a directivity depending on the setting of the control unit 305 to a signal to be transmitted/received, the communication unit 301 may apply a beamforming weight to the signal. According to an embodiment, the communication unit 301 may include a radio frequency (RF) block (or RF unit). The RF block may include a first RF circuity related to the antenna and a second RF circuity related to baseband processing. The first RF circuity may be referred to as RF-Antenna (RF-A). The second RF circuity may be referred to as RF-Baseband (RF-B).

In addition, the communication unit 301 may transmit/receive a signal. To this end, the communication unit 301 may include at least one transceiver. The communication unit 301 may receive a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), a configuration message, control information, or downlink data, etc. In addition, the communication unit 301 may transmit an uplink signal. The uplink signal may include a random access-related signal (e.g., random access preamble (RAP) (message 1 (Msg1), message 3 (Msg3))), a reference signal (e.g., sounding reference signal (SRS), DM-RS), or a power headroom report (PHR), or the like.

In addition, the communication unit 301 may include different communication modules to process signals of different frequency bands. Further, the communication unit 301 may include a plurality of communication modules to support a plurality of different radio access technologies. For example, the different radio access technologies may include a Bluetooth low energy (BLE), a wireless fidelity (Wi-Fi), a Wi-Fi gigabyte (WiGig), a cellular network (e.g., long term evolution (LTE), new radio (NR)), or the like. In addition, the different frequency bands may include a super high frequency (SHF) (e.g., 2.5GHz, SGHz) band and a millimeter wave (e.g., 38GHz, 60GHz, etc.) band. In addition, the communication unit 301 may use the same-type radio access technology on different frequency bands (e.g., an unlicensed band for licensed assisted access (LAA), Citizens broadband radio service (CBRS) (e.g., 3.5GHz)).

The communication unit 301 transmits and receives a signal as described above. Accordingly, the communication unit 301 may be referred to as a transmitter, a receiver, or a transceiver. In addition, in the following description, transmission and reception performed through a radio channel are used to imply that the aforementioned processing is performed by the communication unit 301.

The storage unit 303 stores data such as a basic program, application program, configuration information, or the like for an operation of the UE 300. The storage unit 303 may be constructed of a volatile memory, a non-volatile memory, or a combination of the volatile memory and the non-volatile memory. In addition, the storage unit 303 may provide the stored data according to a request of the control unit 305. According to various embodiments, the storage unit 303 may store each beam of a beam set to be operated in the UE 300 or direction information on each beam of an auxiliary beam pair.

The control unit 305 controls overall operations of the UE 300. For example, the control unit 305 may transmit and receive a signal via the communication unit 301. Further, the control unit 305 writes and reads data in the storage unit 303. In addition, the control unit 305 may perform functions of a protocol stack required in a communication specification. To this end, the control unit 305 may include at least one processor. The control unit 305 may include at least one processor or micro-processor, or may be part of the processor. In addition, part of the communication unit 301 and the control unit 305 may be referred to as a CP. The control unit 305 may include various modules for performing communication. According to various embodiments, the control unit 305 may control the UE to perform operations based on various embodiments described above.

The disclosure relates to a method and apparatus for providing a band combination capable of providing an optimal service to a UE under a dual connectivity (DC) structure.

A band combination (BC) in a wireless communication system may be understood as a combination of bands used in communication between a UE and a base station. In order to provide optimal communication to the UE, the base station may determine a band combination in which the UE is capable of obtaining an optimal data throughput. An optimal service may be provided to the UE according to such a band combination.

In order to determine a best band combination, the base station may request the UE to provide information on a band combination supportable by the UE. At the request of the base station, the UE may transmit, to the base station, UE BC information regarding the band combination supportable by the UE. Information on at least one band combination supportable by the UE may be included in the UE BC information. The UE BC information may be included in UE capability information to be transmitted by the UE to the base station.

Information on a band combination included in the UE BC information may be determined according to a radio access technology (RAT) used by the base station. If the base station supports an LTE network, the UE may transmit BC information including an LTE band to the base station. If the base station supports an NR network, the UE may transmit BC information including an NR band to the base station. If the base station supports the LTE network and the NR network, the UE may transmit BC information including at least one of the LTE band and the NR band to the base station. For example, if the base station uses only LTE, the UE BC information may not include a band combination including the NR band among band combinations supportable by the UE. As another example, if the base station uses both LTE and NR, the UE BC information may include both the LTE band and the NR band. As another example, if the base station uses only NR, the UE BC information may not include a band combination including the LTE band among band combinations supportable by the UE.

The base station may need to provide an optimal service to the UE, and may measure a data rate to determine whether the optimal service is provided. The data rate means an amount of data transmitted during a reference time, and may be measured in units of bps.

In an embodiment, the data rate may be determined in an NR-based wireless communication system, based on the following equation.

<Equation 1>

$$\text{data rate (in Mbps)} = 10^{-6} \cdot \sum_{j=1}^{J} \left( v_{\text{Lyeses}}^{(j)} \cdot Q_m^{(j)} \cdot f^{(j)} \cdot R_{\max} \cdot \frac{N_{PRB}^{BW(j),\mu} \cdot 12}{T_s^{\mu}} \cdot \left(1 - OH^{(j)}\right) \right)$$

In Equation 1, J denotes the number of aggregated component carriers in a band or a band combination, and Rmax denotes 948/1024. In addition, for a j-th component carrier, $v_{\text{Lyeses}}^{(j)}$ denotes the maximum number of supportable layers, $Q_m^{(j)}$ denotes a maximum supportable modulation order, $f^{(j)}$ denotes a scaling factor, $\mu$ denotes a numerology, $T_s^{\mu}$ denotes a duration of an orthogonal frequency division multiplexing (OFDM) symbol in a subframe for the numerology of $\mu$, $N_{PRB}^{BW(j),\mu}$ denotes resource block (RB) allocation in a bandwidth $BW^{(j)}$ having the numerology of $\mu$, and $OH^{(j)}$ denotes overhead.

In an embodiment of the disclosure, the data rate in an LTE-based wireless communication system may be determined based on the following equation.

<Equation 2>

$$\text{Data rate} = 10^{-3} \cdot \sum_{j=1}^{J} \text{TBS}_j$$

In Equation 2 above, J denotes the number of LTE component carriers in a multi-radio DC (MR-DC) band combination, TBSj denotes the total maximum number of transmit block bits of a downlink shared channel (DL-SCH), received in a transmission time interval (TTI) of 1ms for a j-th component carriers, that is, a transport block size (TBS).

As described in Equation 1 and Equation 2 above, it may be known that each of factors of determining the data rate is determined according to a band combination. Therefore, it is required to determine a best band combination in order to provide a UE with a service having an optimal data rate.

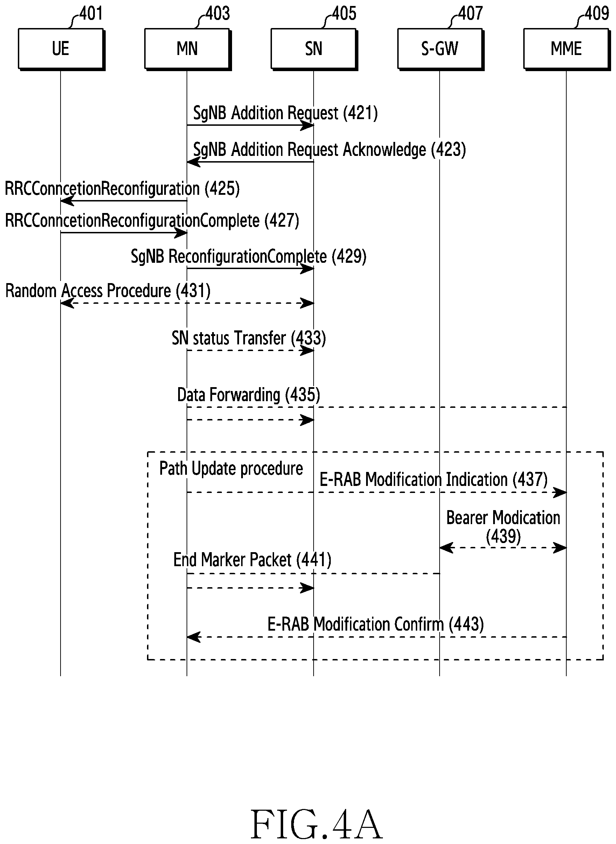

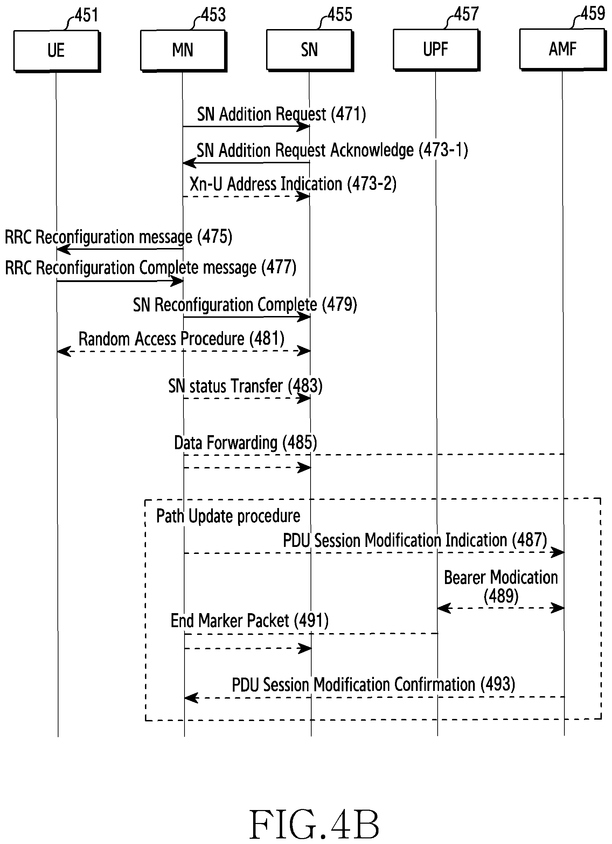

FIG. 4A and FIG. 4B illustrate a signaling flow for determining a band combination according to embodiments of the disclosure. Signaling of a master node (MN) and secondary node (SN) for determining a best band combination is illustrated under a DC structure. FIG. 4A describes a DC structure of an evolved universal terrestrial radio access-new radio dual connectivity (EN-DC) between SNs using the MN and NR using LTE for example, and FIG. 4B describes a DC structure of an NR-NR DC (NR-DC) or an NR E-UTRA dual connectivity (NE-DC) for example. However, this is only an example, and an operation of the MN and SN according to various embodiments of the disclosure is not limited to the aforementioned structure. In other words, the disclosure may also be applied to all multi-radio dual connectivity (MR-DC) structures. For example, an apparatus and method according to various embodiments of the disclosure may be applied to DC structures of ENDC, NG-RAN E-UTRA-NR dual connectivity (NGEN-DC), NR-E-UTRA dual connectivity (NE-DC), and NR-NR dual connectivity (NR-DC).

Referring to FIG. 4A, in operation 421, the MN may transmit an SN addition request message (e.g., SgNB addition request) to the SN. The SN addition request message may be a message for requesting the SN to perform an operation as the SN, when the MN determines to operate the DC structure.

In an embodiment, the MN and the SN need to determine a band combination, in order to determine a band combination to be used by the MN, the SN, and the UE under the DC structure. In order to determine the band combination, the MN may transmit, to the SN, MN BC information regarding an MN band combination usable by the MN.

Although not shown in the figure, prior to operation 421, the MN may receive, from the UE, UE band combination information usable by the UE. The UE band combination information may include information on at least one band combination usable by the UE. The MN may select at least one band combination usable by the MN from among UE band combination information. The MN may measure a data rate for each of the at least one band combination. The MN may measure a data rate for each of the at least one band combination, based on Equation 2 described above. The MN may select at least one band combination usable by the MN, based on the measured data rate for each band combination. For example, since it is difficult to obtain a desired rate in case of communication based on a band combination in which a data rate is measured to be less than or equal to a threshold, the MN may not select this band combination. In order to obtain the desired rate, the MN may select a band combination in which a data rate exceeds a threshold.

The MN may transmit, to the SN, MN band combination information including the selected at least one band combination. The MN band combination information may be included in an SN addition request message (e.g., X2AP SgNB addition request) transmitted by the MN to the SN in operation 421. The addition request message transmitted by the MN to the SN may be included in a radio resource control (RRC) container and forwarded through an interface between the MN and the SN. In the EN-DC structure, the interface between the MN and the SN may be an X2 application protocol (X2AP).

In operation 423, the SN may transmit, to the MN, an SN addition request acknowledge message (e.g., X2AP SgNB addition request acknowledge). The SN addition request acknowledge message may be a response message for the SN addition request message received from the MN. The SN addition request acknowledge message may include information required to operate the SN under a DC structure.

In an embodiment, the SN may select a band combination in which a data rate of the SN is the highest from among the MN band combination information received from the MN. Specifically, the SN may measure a data rate of a secondary cell group (SCG), for each band combination included in the MN band combination information. The data rate may be measured based on Equation 1 described above. The SN may select a band combination in which the data rate of the SCG is measured to be the highest from among band combinations included in the MN BC information. Information on the band combination in which the data rate of the SCG is measured to be the highest may be included in the SN addition request acknowledge message transmitted by the SN to the MN in operation 423.

In operation 425, the MN may transmit an RRC connection reconfiguration message to a UE 401. In operation 427, the UE 401 may transmit an RRC connection reconfiguration complete message. In operation 429, the MN may transmit an SN reconfiguration complete message (e.g., SgNB reconfiguration complete) to the SN. In operation 431, the UE 401 may perform a random access procedure with an SN 405. In operation 433, the MN may transmit an SN status transfer message to the SN. Information on a packet to be transmitted by the SN to the UE 401 may be included in the SN status transfer message. In operation 435, the MN may forward data to the SN. The MN may forward data to be forwarded to the UE 401 through the SN, from among information on data transmitted to the UE through the MN before DC is configured. In operation 441, the MN may transmit a packet including an end marker (i.e., an end marker packet) to the SN. The end marker packet may include information indicating that there is no more data to be forwarded by the MN to the SN.

In operation 437, operation 439, and operation 443, the MN may perform a path update procedure. Specifically, in operation 437, the MN may transmit an E-UTRAN radio access bearer (E-RAB) modification indication message to a mobility management entity (MME). In operation 439, the MME may transmit a bearer modification message to a serving gateway (S-GW). In operation 443, the MME may transmit an E-RAB modification confirmation message to the MN.

Although it has been described above under the premise of the EN-DC, this is only an example, and the operation of the MN and SN according to various embodiments of the disclosure is not limited to the aforementioned EN-DC structure. For example, in case of not the EN-DC structure but the NE-DC structure or the NR-NR structure, an access and mobility managing function (AMF), a session management function (SMF), a user plane function (UPF), or the like may be used instead of the MME and the S-GW.

In addition, although embodiments of the disclosure have been described under the premise of signaling of an SN addition request message and SN addition request acknowledge message of the MN, this is only an example, and the embodiments of the disclosure are not limited thereto. In an embodiment, the embodiments of the disclosure may also be equally applied to a signaling process of an SN modification request message (e.g., SN modification request) and an SN modification request acknowledge message (e.g., SN modification response).

For example, the MN may transmit MN band combination information including the selected at least one band combination to the SN. The MN band combination information may be included in the SN modification request message transmitted by the MN to the SN. The SN modification request message transmitted by the MN to the SN may be transmitted through radio resource control (RRC) signaling. In addition, the SN may transmit an SN modification request acknowledge message (e.g., SgNB addition request acknowledge) to the MN. The SN modification request acknowledge message may be a response message for the SN addition request message received from the MN. The SN addition request acknowledge message may include information required to operate the SN under a DC structure.

FIG. 4B illustrates a signaling flow for determining a band combination according to embodiments of the disclosure. Signaling of a master node (MN) 456 and secondary node (SN) for determining a best band combination is illustrated under a DC structure. FIG. 4B describes a DC structure of an NR-NR DC (NR-DC) or an NR E-UTRA dual connectivity (NE-DC) for example. However, this is only an example, and an operation of the MN and SN according to various embodiments of the disclosure is not limited to the aforementioned structure. In other words, the disclosure may also be applied to all multi-radio dual connectivity (MR-DC) structures. For example, an apparatus and method according to various embodiments of the disclosure may be applied to DC structures of ENDC, NG-RAN E-UTRA-NR dual connectivity (NGEN-DC), NR-E-UTRA dual connectivity (NE-DC), and NR-NR dual connectivity (NR-DC).

Referring to FIG. 4B, in operation 471, the MN may transmit an SN addition request message (e.g., XnAP SN Addition Request) to the SN. The SN addition request message may be a message for requesting the SN to perform an operation as the SN, when the MN determines to operate a DC structure.

In an embodiment, the MN and the SN need to determine a band combination, in order to determine a band combination to be used by the MN, the SN, and the UE under the DC structure. In order to determine the band combination, the MN may transmit, to the SN, MN BC information regarding an MN band combination usable by the MN.

Although not shown in the figure, prior to operation 471, the MN may receive, from the UE, UE band combination information usable by the UE. The UE band combination information may include information on at least one band combination usable by the UE. The MN may select at least one band combination usable by the MN from among UE band combination information. The MN may measure a data rate for each of the at least one band combination. The MN may measure a data rate for each of the at least one band combination, based on Equation 2 described above. The MN may select at least one band combination usable by the MN, based on the measured data rate for each band combination. For example, since it is difficult to obtain a desired rate in case of communication based on a band combination in which a data rate is measured to be less than or equal to a threshold, the MN may not select this band combination. In order to obtain the desired rate, the MN may select a band combination in which a data rate exceeds a threshold.

The MN may transmit, to the SN, MN band combination information including the selected at least one band combination. The MN band combination information may be included in an SN addition request message (e.g., XnAP SN addition request) transmitted by the MN to the SN in operation 471. The addition request message transmitted by the MN to the SN may be included in a radio resource control (RRC) container and forwarded through an interface between the MN and the SN. In the NR-DC and EN-DC structures, the interface between the MN and the SN may be an Xn Application Protocol (XnAP).

In operation 473-1, the SN may transmit, to the MN, an SN addition request acknowledge message (e.g., XnAP SN addition request acknowledge). The SN addition request acknowledge message may be a response message for the SN addition request message received from the MN. The SN addition request acknowledge message may include information required to operate the SN under a DC structure.

In an embodiment, the SN may select a band combination in which the band rate of the SN is the highest from among the MN band combination information received from the MN. Specifically, the SN may measure a data rate of a secondary cell group (SCG), for each band combination included in the MN band combination information. The data rate may be measured based on Equation 1 described above. The SN may select a band combination in which the data rate of the SCG is measured to be the highest from among band combinations included in the MN BC information. Information on the band combination in which the data rate of the SCG is measured to be the highest may be included in the SN addition request acknowledge message transmitted by the SN to the MN in operation 473-1.

In operation 473-2, the MN may indicate an Xn-U address to the SN. A procedure of indicating the Xn-U address may be used to provide a forwarding address from the SN to a previous MN, for all packet data unit (PDU) session resources successfully configured in the MN. Through operation 473-2, the forwarding address and Xn-U address information for completing an SN end bearer configuration may be provided from the MN to the SN.

In operation 475, the MN may transmit an RRC connection reconfiguration message to a UE 451. In operation 477, the UE 451 may transmit an RRC connection reconfiguration complete message. In operation 479, the MN may transmit an SN reconfiguration complete message (e.g., SN Reconfiguration Complete) to the SN. In operation 481, the UE 451 may perform a random access procedure with an SN 455. In operation 483, the MN may transmit an SN status transfer message to the SN. Information on a packet to be transmitted by the SN to the UE 451 may be included in the SN status transfer message. In operation 485, the MN may forward data to the SN. The MN may forward data to be forwarded to the UE 451 through the SN, from among information on data transmitted to the UE through the MN before DC is configured. In operation 491, the MN may transmit a packet including an end marker (i.e., an end marker packet) to the SN. The end marker packet may include information indicating that there is no more data to be forwarded by the MN to the SN.

In operation 487, operation 489, and operation 493, the MN may perform a path update procedure. Specifically, in operation 487, the MN may transmit a packet data unit (PDU) session modification indication message to an access and mobility management function (AMF). In operation 489, the AMF may transmit a bearer modification message to a user plane function (UPF). In operation 493, the AMF may transmit a PDU session modification confirmation message to the MN.

Although it has been described above under the premise of the NR-DC or NE-DC, this is only an example, and the operation of the MN and SN according to various embodiments of the disclosure is not limited to the aforementioned NR-DC or NE-DC structure. For example, in case of the EN-DC structure, an MME, an S-GW, or the like may be used instead of the AMF and the UPF.

In addition, although embodiments of the disclosure have been described under the premise of signaling of an SN addition request message and SN addition request acknowledge message of the MN, this is only an example, and the embodiments of the disclosure are not limited thereto. In an embodiment, the embodiments of the disclosure may also be equally applied to a signaling process of an SN modification request message (e.g., SN modification request) and an SN modification request acknowledge message (e.g., SN modification response).

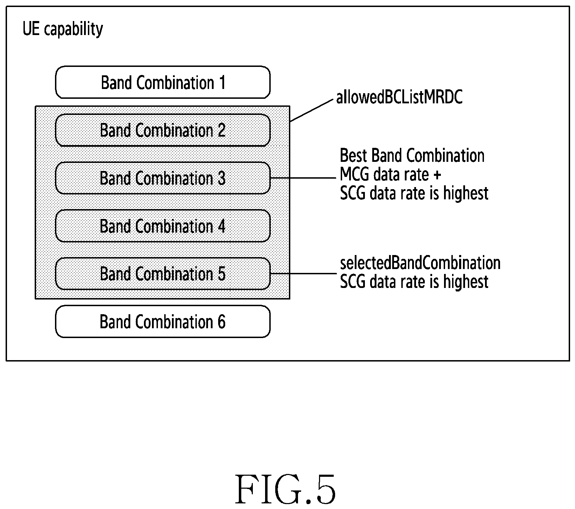

FIG. 5 illustrates an example of selecting a band combination (BC) in a wireless communication system according to embodiments of the disclosure.Referring to FIG. 5, user equipment (UE) capability information 500 transmitted by a UE to an MN is illustrated. The UE capability information may include information on a band combination supportable by the UE.

Referring to FIG. 5, the band combination supportable by the UE may include a band combination 1 to a band combination 6. An MN and an SN may need to perform signaling to determine a band combination to be used for a DC operation. First, the MN may transmit MN BC information to the SN. The MN BC information may include at least one of band combinations included in band combination information received from the UE. For example, the band combination 2 to the band combination 5 may correspond to a band combination (e.g., allowedBC-ListMRDC) usable by the MN. According to an embodiment, MN BC information forwarded from the MN to the SN may be included in the SN addition request message of operation 421 of FIG. 4A. The SN may select any one band combination (e.g., selectedBandCombination) from among at least one band combination included in the MN BC information received from the MN. The SN may transmit a response message including information indicating the selected band combination to the MN. According to an embodiment, the information indicating the selected band combination forwarded from the SN to the MN may be included in the SN addition request acknowledge message of operation 423 of FIG. 4A.

The MN may transmit, to the SN, information on a band combination selected by the MN. If the MN simply transmits information on the band combination usable by the MN, the SN may select a band combination in which the data rate of the SCG is the highest from among band combinations selected by the MN.

In this case, since the SN is aware of only information on at least one band combination selected by the MN, it is difficult to select a band combination in which a total sum of a data rate of MCG and a data rate of SCG is the highest.

Referring to FIG. 5, the band combination in which the data rate of the SCG is the highest and the band combination in which the data rate considering both the MCG and the SCG is the highest may be different. For example, it may be assumed that an MCG data rate of a band combination 3 is 5 and an SCG data rate is 4, and that an MCG data rate of the band combination 5 is 2 and an SCG data rate is 5 (not shown). For more efficient DC operations, it is efficient to communicate by using the band combination 3 in which a sum of data rates of MCG and SCG is the highest. However, MN BC information includes only band combination information usable by the MN, and does not include information related to a data rate of the MN. Therefore, the SN has no choice but to select the band combination 5 which is a band combination in which the data rate of the SCG is the highest and transmit it to the MN. That is, although selecting of the band combination 3 having a total data rate of 9 (5 + 4) is best band combination selection for DC operations, the band combination 5 having a total data rate of 7 (2 + 5) may be selected as a band combination. In order to solve this problem, in embodiments of the disclosure, the MN transmits to the MN not only information on the band combination but also information on a data rate of the MN, and thus selects a best band combination in the SN to allow efficient DC operations.

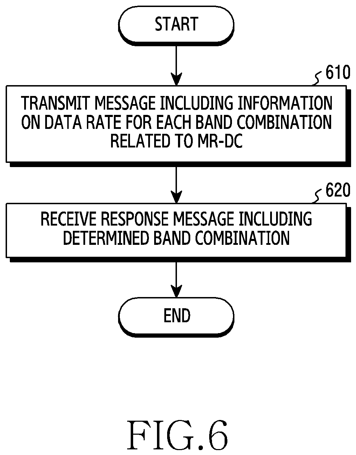

FIG. 6 illustrates an operational flow of a master node (MN) according to embodiments of the disclosure.

The MN means a base station which provides a master cell group (MSG) in a DC structure. In case of EN-DC, the MN may correspond to an eNB. In case of NE-DC and NR-NR structures, the MN may correspond to a gNB. Although the followings are described under the premise of the EN-DC, this is only an example, and the operation of the MN and SN according to various embodiments of the disclosure is not limited to the EN-DC structure.

Although not shown in the figure, in order to determine a band combination, the MN may request a UE to provide information on a band combination supportable by the UE. At the request of the MN, the UE may transmit, to the base station, UE BC information regarding the band combination supportable by the UE. Information regarding at least one band combination supportable by the UE may be included in the UE BC information. The UE BC information may be included in UE capability information to be transmitted by the UE to the base station.

Referring to FIG. 6, in operation 610, the MN may transmit a message including band combination information including information on a data rate for each band combination related to MR-DC. The message may be a radio resource control (RRC) message.

The information on the data rate for each band combination may include a data rate for each band combination of the MN. The information on the data rate for each band combination may include information on a latency and the data rate for each band combination of the MN. The information on the data rate for each band combination may be included in the message in the form of an index, an ID, and a weight.

The information on the data rate for each band combination of the MN may be present for each of at least one band combination usable by the MN. For example, if the number of band combinations usable by the MN is k, the number of pieces of information on a data rate may correspond to k. In order to transmit the information on the data rate for each band combination, the MN may measure a data rate of the MCG for each band combination. The data rate may be measured based on Equation 1 when the MN is a gNB, and may be measured based on Equation 2 when the MN is an eNB.

The MN may transmit, to the SN, a message including band combination information including information on a data rate for each band combination related to MR-DC.

For example, the band combination information may be included in the RRC message in the form as follows.

[Table 1]

| | |
|---|---|
| CG-ConfigInfo-IEs ::=<br>    ue-CapabilityInfo CapabilityRAT-ContainerList)<br>    OPTIONAL,<br>    configRestrictInfo<br>... | SEQUENCE {<br>OCTET STRING (CONTAINING UE-<br>...<br><br>ConfigRestrictInfoSCG |
| ConfigRestrictInfoSCG ::=<br>    allowedBC-ListMRDC<br>... | SEQUENCE {<br>    BandCombinationInfoList |
| BandCombinationInfoList ::= (1..maxBandComb)) OF BandCombinationInfo<br><br>BandCombinationInfo ::=<br>    bandCombinationIndex<br>    allowedFeatureSetsList (1..maxFeatureSetsPerBand)) OF FeatureSetEntryIndex<br>    } | SEQUENCE (SIZE<br><br><br>SEQUENCE {<br>BandCombinationIndex,<br>SEQUENCE (SIZE |

In Table 1 above, allowedBC-ListMRDC means a list of band combinations usable by the MN to operate the MR-DC. allowedBC-ListMRDC may be constructed of BandCombinationInfoList, and may have a form of a sequence of BandCombinationInfo. bandCombinationIndex means a band combination indicator.

In an embodiment, information on a data rate of the MCG may be included in the message to be transmitted by the MN to the SN in operation 610. The information on the data rate of the MCG may be present for each band combination. Since the information on the data rate of the MCG is included in the message to be transmitted by the MN to the SN, the SN may consider up to the data rate of the MCG for each band combination and thus select a best band combination considering a total amount of the MCG data rate and SCG data rate. The information on the data rate of the MCG may be included in the RRC message in the following form.

[Table 2]

| ConfigRestrictInfoSCG ::= | SEQUENCE { |
| allowedBC-ListMRDC | BandCombinationInfoList |
| ... | |
| [[ | |
| bandCombinationMcgInfoList | |
| BandCombinationCellGroupInfoList | OPTIONAL |
| ]] | |
| } | |
| BandCombinationCellGroupInfoList | ::= SEQUENCE (SIZE |
| (1..maxBandComb)) OF BandCombinationCellGroupInfo | |
| BandCombinationCellGroupInfo | ::= SEQUENCE { |
| expectedDataRate | INTEGER(0..99999999), |
| expectedLatency under0p5ms, under1p0ms}, | ENUMERATED {under0p1ms, |
| } | |

In Table 2 above, allowedBC-ListMRDC means a list of band combinations usable by the MN to operate the MR-DC. allowedBC-ListMRDC may be constructed of BandCombinationInfoList, and may have a form of a sequence of BandCombinationInfo. bandCombinationIndex means a band combination indicator.

bandCombinationMCGInfoList means a list of information related to communication performance of the MCG for each band combination included in the band combination usable by the MN. The aforementioned information on the data rate of the MCG for each band combination may include information (expectedDataRate) on the data rate of the MCG for each band combination and information (expectedLatency) on an expected latency of the MCG for each band combination. The data rate may be measured for each band combination, and may be measured based on Equation 1 or Equation 2.

In an embodiment, the data rate may be included in a message including the band combination information usable by the MN in the form of a measured data rate value (in units of bps). In addition, in another embodiment, information on the data rate may be divided into specific intervals from 0 to a maximum data rate value and may be included in the message including the band combination information usable by the MN in the form of an indicator indicating each divided duration. In an embodiment, the latency may be measured for each band combination, and may include information on the latency which occurs when the band combination is used.

In operation 620, the MN may receive a response message including the determined band combination. The response message may include information on a band combination selected by the SN. The SN may determine a band combination to be used based on a message including the received band combination information.

Although not shown in FIG. 6, the MN may identify a band combination to be used for DC operations through band combination information included in the response message. The MN may transmit information indicating the identified band combination to a UE. The MN may perform communication with the UE and the SN by using the band combination of the UE. Efficient DC operations may be possible by performing communication through a band combination selected in consideration of data rates of both the MCG and the SCG.

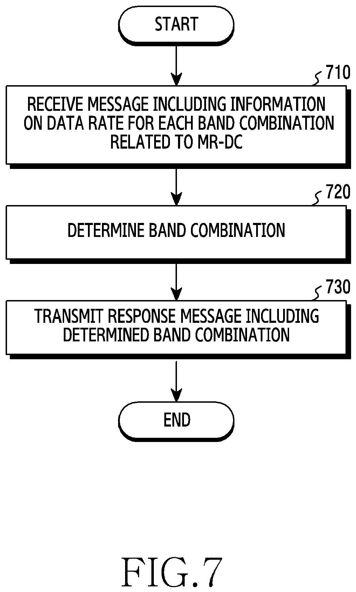

FIG. 7 illustrates an operational flow of a secondary node (SN) according to embodiments of the disclosure. The SN means a base station which provides a secondary cell group (SCG) in a DC structure. In case of EN-DC and NR-NR structures, the SN may correspond to a gNB. In case of an NE-DC structure, the SN may correspond to an eNB. Although the followings are described under the premise of the EN-DC, this is only an example, and the operation of the MN and SN according to various embodiments of the disclosure is not limited to the EN-DC structure.

Referring to FIG. 7, in operation 710, the SN may receive a message including band combination information including information on a data rate for each band combination related to MR-DC. The message may be a radio resource control (RRC) message. The information on the data rate for each band combination may include a data rate for each band combination of the MN.

The information on the data rate for each band combination may include information on a latency and the data rate for each band combination of the MN. The information on the data rate for each band combination may be included in the message in the form of an index, an ID, and a weight.

The information on the data rate for each band combination of the MN may be present for each of at least one band combination usable by the MN. For example, if the number of band combinations usable by the MN is k, the number of pieces of information on a data rate may correspond to k. In order to transmit the information on the data rate for each band combination, the MN may measure a data rate of the MCG for each band combination. The data rate may be measured based on Equation 1 when the MN is a gNB, and may be measured based on Equation 2 when the MN is an eNB.

For example, the band combination information may be included in the RRC message in the form as follows.

[Table 3]

| | |
|---|---|
| CG-ConfigInfo-IEs ::=<br>  ue-CapabilityInfo<br>CapabilityRAT-ContainerList)<br>OPTIONAL,<br>  configRestrictInfo<br>... | SEQUENCE {<br>OCTET STRING (CONTAINING UE-<br>...<br><br>ConfigRestrictInfoSCG |
| ConfigRestrictInfoSCG ::=<br>  allowedBC-ListMRDC<br>... | SEQUENCE {<br>    BandCombinationInfoList |
| BandCombinationInfoList ::=<br>BandCombinationInfo<br>BandCombinationInfo ::=<br>  bandCombinationIndex<br>  allowedFeatureSetsList<br>(1..maxFeatureSetsPerBand)) OF FeatureSetEntryIndex<br>} | SEQUENCE (SIZE (1..maxBandComb)) OF<br><br>SEQUENCE {<br>,<br>    SEQUENCE (SIZE |

In Table 3 above, allowedBC-ListMRDC means a list of band combinations usable by the MN to operate the MR-DC. allowedBC-ListMRDC may be constructed of BandCombinationInfoList, and may have a form of a BandCombinationInfo. bandCombinationIndex means a band combination indicator.

In an embodiment, information on a data rate of the MCG may be included in the message to be transmitted by the MN to the SN in operation 710. The information on the data rate of the MCG may be present for each band combination. By receiving a message including the information on the data rate of the MCG, the SN may consider up to the data rate of the MCG for each band combination and thus select a best band combination considering a total amount of the MCG data rate and SCG data rate.

For example, the information on the data rate of the MCG may be included in the RRC message in the following form.

[Table 4]

| | |
|---|---|
| ConfigRestrictInfoSCG ::=<br>    allowedBC-ListMRDC<br>...<br>[[<br>  bandCombinationMcgInfoList<br>OPTIONAL<br>]]<br>} | SEQUENCE {<br>    BandCombinationInfoList<br><br><br>BandCombinationCellGroupInfoList |
| BandCombinationCellGroupInfoList<br>(1..maxBandComb)) OF BandCombinationCellGroupInfo<br>BandCombinationCellGroupInfo<br>expectedDataRate<br>expectedLatency | ::= SEQUENCE (SIZE<br><br>::= SEQUENCE {<br>INTEGER(0..99999999),<br>ENUMERATED {under0plms, under0p5ms, |

(continued)

| under1p0ms}, |
| } |

In Table 4 above, allowedBC-ListMRDC means a list of band combinations usable by the MN to operate the MR-DC. allowedBC-ListMRDC may be constructed of BandCombinationInfoList, and may have a form of a sequence of BandCombinationInfo. bandCombinationIndex means a band combination indicator.

bandCombinationMCGInfoList means a list of information related to communication performance of the MCG for each band combination included in the band combination usable by the MN. The aforementioned information on the data rate for each band combination may include information (expectedDataRate) on the data rate for each band combination and information (expectedLatency) on an expected latency of the MCG for each band combination. The data rate may be measured for each band combination, and may be measured based on Equation 1 or Equation 2.

In an embodiment, an expected data rate may be included in a message including the band combination information usable by the MN in the form of a measured data rate value (in units of bps). In addition, in another embodiment, information on the data rate may be divided into specific intervals from 0 to a maximum data rate value and may be included in the message including the band combination information usable by the MN in the form of an indicator indicating each divided duration.

In an embodiment, an expected latency may be measured for each band combination, and may include information on the latency which occurs when the band combination is used.

In operation 720, the SN may determine a band combination. The SN may determine the band combination, based on a message including received band combination information. In order to select the band combination, the SN may measure an expected data rate for each band combination of an SCG. The expected data rate may be measured based on Equation 1 or Equation 2 described above.

The SN may determine a best band combination, based on the expected data rate of the SCG for each band combination and the expected data rate for each band combination of the MCG included in the received band combination information. The SN may select a band combination expected to have the highest total sum of the data rate of the SCG and the data rate of the MCG as the best band combination. For example, even if there is a band combination (e.g., a band combination 1) in which an expected data rate of the SCG is measured to be the highest, when there is another band combination (e.g., a band combination 2) in which a total sum of the data rate of the MCG and the data rate of the SCG is the highest, the SN may select not the band combination 1 but the band combination 2. By selecting a band combination considering not only the data rate of the SCG but also the data rate of the MCG, it is possible to select a best band combination in DC operations.

In operation 730, the SN may transmit the determined band combination to the MN. The SN may transmit a response message to the MN by including information on the determined band combination to the repones message.

A secondary node (SN) apparatus according to an embodiment of the disclosure described above may include a transceiver and a processor operatively coupled to the transceiver. The processor may be configured to receive a request message from a master node (MN), wherein the request message includes information indicating at least one band combination and first data rate information on a data rate of a master cell group (MCG) for each of the at least one band combination, identify a band combination from among the at least one band combination, based on the first data rate information and second data rate information on a data rate of a secondary cell group (SCG), and transmit a response message including information indicating the identified band combination to the MN.

In an embodiment, in order to identify the band combination from among the at least one band combination, the processor may be configured to select a band combination in which a sum of the first data rate and the second data rate is the highest from among the at least one band combination.

In an embodiment, the request message may be received from the MN through radio resource control (RRC) signaling. The SN may use new radio (NR) or long-term evolution (LTE) as a radio access technology (RAT). The MN may use the NR or the LTE as the RAT.

In an embodiment, in the first data rate information, the MCG may include latency information on the at least one band combination.

In an embodiment, in order to identify the band combination from among the at least one band combination, the processor may be configured to select the band combination, based on the latency information and quality of service (QoS) of a service to be provided to a terminal.

An MN apparatus according to an embodiment of the disclosure described above may include a transceiver, and a processor operatively coupled to the transceiver. The processor may be configured to transmit a request message to an SN, wherein the request message includes information indicating at least one band combination and first data rate information on a data rate of an MCG for each of the at least one band combination, and receive a response message including information indicating the identified band combination from the SN. The band combination may be identified from among the at least one band combination, based on the first data rate information and second data rate information on a data rate of an SCG.

In an embodiment, a band combination in which a sum of the first data rate and the second data rate is the highest from among the at least one band combination may be selected as the band combination.

In an embodiment, the request message may be transmitted from the SN through RRC signaling. The SN may use NR or LTE as an RAT. The MN may use the NR or the LTE as the RAT.

In an embodiment, in the first data rate information, the MCG may include latency information on the at least one band combination.

In an embodiment, in the first data rate information, the MCG may include latency information on the at least one band combination.

In an embodiment, the band combination may be selected based on the latency information and QoS of a service to be provided to a terminal.

A method of operating an SN according to an embodiment of the disclosure described above may include receiving a request message from an MN, wherein the request message includes information indicating at least one band combination and first data rate information on a data rate of an MCG for each of the at least one band combination, identifying a band combination from among the at least one band combination, based on the first data rate information and second data rate information on a data rate of an SCG, and transmitting a response message including information indicating the identified band combination to the MN.

In an embodiment, the identifying of the band combination from among the at least one band combination may include selecting a band combination in which a sum of the first data rate and the second data rate is the highest from among the at least one band combination.

In an embodiment, the request message may be received from the MN through RRC signaling. The SN may use NR or LTE as an RAT. The MN may use the NR or the LTE as the RAT.

In an embodiment, in the first data rate information, the MCG may include latency information on the at least one band combination.

In an embodiment, the identifying of the band combination from among the at least one band combination may include selecting a band combination, based on the latency information and QoS of a service to be provided to a terminal.

A method of operating an MN apparatus according to an embodiment of the disclosure described above may include transmitting a request message to an SN, wherein the request message includes information indicating at least one band combination and first data rate information on a data rate of an MCG for each of the at least one band combination, and receiving a response message including information indicating the identified band combination from the SN. The band combination may be identified from among the at least one band combination, based on the first data rate information and second data rate information on a data rate of an SCG.

In an embodiment, a band combination in which a sum of the first data rate and the second data rate is the highest from among the at least one band combination may be selected as the band combination.

In an embodiment, the request message may be transmitted from the SN through RRC signaling. The SN may use NR or LTE as an RAT. The MN may use the NR or the LTE as the RAT.

In an embodiment, in the first data rate information, the MCG may include latency information on the at least one band combination.

In an embodiment, in the first data rate information, the MCG may include latency information on the at least one band combination.

In an embodiment, the band combination may be selected based on the latency information and QoS of a service to be provided to a terminal.

Methods based on the embodiments disclosed in the claims and/or specification of the disclosure may be implemented in hardware, software, or a combination of both. When implemented in software, computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

The program (i.e., the software module or software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, and a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network, such as the Internet, an Intranet, a local area network (LAN), a wide LAN (WLAN), or a storage area network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

**Claims**

1. A secondary node (SN) apparatus for multi-radio-dual connectivity (MR-DC) in a wireless communication system, the apparatus comprising:

   a transceiver; and
   at least one processor operatively coupled to the transceiver,
   wherein the at least one processor is configured to:

      receive a request message from a master node (MN), wherein the request message includes information indicating at least one band combination and first data rate information on a data rate of a master cell group (MCG) for each of the at least one band combination,
      identify a band combination from among the at least one band combination, based on the first data rate information and second data rate information on a data rate of a secondary cell group (SCG), and
      transmit a response message including information indicating the identified band combination to the MN.

2. The apparatus of claim 1, wherein, in order to identify the band combination from among the at least one band combination, the at least one processor is configured to select a band combination in which a sum of the first data rate and the second data rate is the highest from among the at least one band combination.

3. The apparatus of claim 1,

   wherein the request message is received from the MN through radio resource control (RRC) signaling, and
   wherein the SN uses new radio (NR) or long-term evolution (LTE) as a radio access technology (RAT), and the MN uses the NR or the LTE as the RAT.

4. The apparatus of claim 1, wherein, in the first data rate information, the MCG includes latency information on the at least one band combination.

5. The apparatus of claim 4, wherein, in order to identify the band combination from among the at least one band combination, the at least one processor is configured to select the band combination, based on the latency information and quality of service (QoS) of a service to be provided to a terminal.

6. A secondary node (MN) apparatus for multi-radio-dual connectivity (MR-DC) in a wireless communication system, the apparatus comprising:

   a transceiver; and
   at least one processor operatively coupled to the transceiver,
   wherein the at least one processor is configured to:
   transmit a request message to a master node (SN), wherein the request message includes information indicating at least one band combination and first data rate information on a data rate of a master cell group (MCG) for each of the at least one band combination; and

receive a response message including information indicating an identified band combination from the SN, wherein the band combination is identified among the at least one band combination, based on the first data rate information and second data rate information on a data rate of a secondary cell group (SCG).

7. The apparatus of claim 6, wherein a band combination in which a sum of the first data rate and the second data rate is the highest from among the at least one band combination is selected as the band combination.

8. The apparatus of claim 1,

   wherein the request message is transmitted from the SN through radio resource control (RRC) signaling, and wherein the SN uses new radio (NR) or long-term evolution (LTE) as a radio access technology (RAT), and the MN uses the NR or the LTE as the RAT.

9. The apparatus of claim 6, wherein, in the first data rate information, the MCG includes latency information on the at least one band combination.

10. The apparatus of claim 9, wherein the band combination is selected based on the latency information and quality of service (QoS) of a service to be provided to a terminal.

11. A method of operating a secondary node (SN) for multi-radio-dual connectivity (MR-DC) in a wireless communication system, the method comprising:

    receiving a request message from a master node (MN), wherein the request message includes information indicating at least one band combination and first data rate information on a data rate of a master cell group (MCG) for each of the at least one band combination;
    identifying a band combination from among the at least one band combination, based on the first data rate information and second data rate information on a data rate of a secondary cell group (SCG); and
    transmitting a response message including information indicating the identified band combination to the MN.

12. The method of claim 11, wherein the identifying of the band combination from among the at least one band combination comprises selecting a band combination in which a sum of the first data rate and the second data rate is the highest from among the at least one band combination.

13. The method of claim 11,

    wherein the request message is received from the MN through radio resource control (RRC) signaling, and wherein the SN uses new radio (NR) or long-term evolution (LTE) as a radio access technology (RAT), and the MN uses the NR or the LTE as the RAT.

14. The method of claim 6, wherein, in the first data rate information, the MCG includes latency information on the at least one band combination.

15. The method of claim 14, wherein the identifying of the band combination from among the at least one band combination comprises selecting a band combination, based on the latency information and quality of service (QoS) of a service to be provided to a terminal.

FIG.1

200

| Wireless communication unit | Backhaul communication unit | Storage unit |
|---|---|---|
| 201 | 203 | 205 |

| Control unit |
|---|
| 207 |

# FIG.2

300

301

Communication unit

303

Storage unit

305

Control unit

FIG.3

FIG.4A

FIG.4B

UE capability

Band Combination 1

allowedBCListMRDC

Band Combination 2

Band Combination 3

Best Band Combination
MCG data rate +
SCG data rate is highest

Band Combination 4

Band Combination 5

selectedBandCombination
SCG data rate is highest

Band Combination 6

FIG.5

START

610

TRANSMIT MESSAGE INCLUDING INFORMATION ON DATA RATE FOR EACH BAND COMBINATION RELATED TO MR-DC

620

RECEIVE RESPONSE MESSAGE INCLUDING DETERMINED BAND COMBINATION

END

FIG.6

FIG.7

<table>
<tr><td colspan="2"><b>INTERNATIONAL SEARCH REPORT</b></td><td>International application No.<br><br><b>PCT/KR2022/004078</b></td></tr>
</table>

| **A.** | **CLASSIFICATION OF SUBJECT MATTER** |
|---|---|

**H04W 28/20**(2009.01)i; **H04W 28/22**(2009.01)i; **H04W 28/24**(2009.01)i; **H04W 72/04**(2009.01)i; **H04W 76/16**(2018.01)i; **H04W 88/08**(2009.01)i

According to International Patent Classification (IPC) or to both national classification and IPC

| **B.** | **FIELDS SEARCHED** |
|---|---|

Minimum documentation searched (classification system followed by classification symbols)

H04W 28/20(2009.01); H04B 7/024(2017.01); H04L 5/00(2006.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MR-DC(multi radio dual connectivity), MN(master node), SN(secondary node), band combination, MCG(master cell group), SCG(secondary cell group), data rate

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | NOKIA et al. UE Capabilities description. R2-2011127, 3GPP TSG-RAN WG2 Meeting #112 Electronic. Elbonia. 16 November 2020.<br>See section 7.3. | 1-15 |
| A | INTEL CORPORATION. Release-16 UE capabilities based on RAN1, RAN4 feature lists and RAN2 corrections. R2-2010851, 3GPP TSG RAN WG2 Meeting #112e, Electronic meeting. 20 November 2020.<br>See section 4.1. | 1-15 |
| A | NOKIA et al. Inter-node messaging for supporting intra-band EN-DC scenarios. R2-2102496, 3GPP TSG-RAN WG2 Meeting #113 Electronic. Elbonia. 05 March 2021.<br>See section 2. | 1-15 |
| A | US 2020-0119773 A1 (SAMSUNG ELECTRONICS CO., LTD.) 16 April 2020 (2020-04-16)<br>See paragraphs [0108]-[0122]; and figures 7-8. | 1-15 |
| A | US 2019-0342873 A1 (SAMSUNG ELECTRONICS CO., LTD.) 07 November 2019 (2019-11-07)<br>See paragraphs [0044]-[0081]; and figures 3-5. | 1-15 |

☐ Further documents are listed in the continuation of Box C.          ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 June 2022** | **22 June 2022** |

| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
|---|---|
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/004078**

| Patent document cited in search report | | | Publication date (day/month/year) | Patent family member(s) | | | Publication date (day/month/year) |
|---|---|---|---|---|---|---|---|
| US | 2020-0119773 | A1 | 16 April 2020 | US | 10141983 | B2 | 27 November 2018 |
| | | | | US | 2015-0327107 | A1 | 12 November 2015 |
| | | | | US | 2019-0097690 | A1 | 28 March 2019 |
| | | | | WO | 2015-170917 | A1 | 12 November 2015 |
| US | 2019-0342873 | A1 | 07 November 2019 | CN | 104919845 | A | 16 September 2015 |
| | | | | EP | 2905989 | A1 | 12 August 2015 |
| | | | | EP | 2905989 | A4 | 20 July 2016 |
| | | | | EP | 2905989 | B1 | 30 December 2020 |
| | | | | KR | 10-2014-0047504 | A | 22 April 2014 |
| | | | | KR | 10-2047796 | B1 | 22 November 2019 |
| | | | | US | 10356793 | B2 | 16 July 2019 |
| | | | | US | 2015-0271806 | A1 | 24 September 2015 |
| | | | | US | 2018-0160420 | A1 | 07 June 2018 |
| | | | | US | 9888478 | B2 | 06 February 2018 |
| | | | | WO | 2014-058222 | A1 | 17 April 2014 |

Form PCT/ISA/210 (patent family annex) (July 2019)